# EUROPEAN PATENT APPLICATION

(11) **EP 4 718 837 A1**
(43) Date of publication of application: **01.04.2026**
(21) Application number: 25202644.8
(22) Date of filing: 17.09.2025
(51) Int. Cl.: H04N 5/77, H04N 23/661, H04N 21/433, H04N 21/4335, H04N 1/00

(54) **COMMUNICATION APPARATUS, CONTROL METHOD, AND PROGRAM**

(30) Priority: 27.09.2024 JP 2024168930
(71) Applicant: Canon Kabushiki Kaisha, Tokyo, 146-8501 (JP)
(72) Inventor: ANDO, Takayasu, Tokyo, 146-8501 (JP); YOSHIKAWA, Akio, Tokyo, 146-8501 (JP)
(74) Representative: Canon Europe Limited

(57) **Abstract**

A communication apparatus (100) includes a time control unit (107) configured to manage date and time information, a file acquisition unit (100) configured to acquire a file, a recording unit (110) configured to record an acquisition date and time at which the file has been acquired, based on the date and time information managed by the time control unit, and a transmission control unit (101) configured to compare an acquisition date and time of a file to be transmitted to an external device with a current date and time managed by the time control unit, and, when a comparison result does not satisfy a predetermined condition, to prevent transmission of the file to the external device.

## Description

### TECHNICAL FIELD

The present disclosure relates to a communication apparatus, a control method, and a program.

### BACKGROUND

A storage service (data server) for uploading content data captured by a user via the Internet and storing the content data in the cloud has recently been widely used.

It has become standard for image capturing apparatuses such as digital cameras to be equipped with communication functions, enabling the image capturing apparatus to directly upload content data recorded by the image capturing apparatus in the cloud using the communication functions.

Some storage services provide various additional functions. One of the additional functions is a function that allows a user to set a recording prohibition period on the service, during which content data is prevented from being uploaded (even if the image capturing apparatus tries to upload it, a server rejects it). In order to implement this function, the image capturing apparatus transmits the creation date and time information of the file to the server. The creation date and time of the file depends on the date and time setting of the image capturing apparatus when the file is created; however, the date and time set in the image capturing apparatus is not necessarily always correct. Unless the creation date and time of the file is correct, even if a file is created during the recording prohibition period set by the user, there is a possibility that the file will be uploaded.

Japanese Patent Laid-Open Publication No. 2010-28692 discloses a method for controlling content playback permission based on time and maintaining the date and time always correct by being synchronized with a time standard station.

The system disclosed in Japanese Patent Laid-Open Publication No. 2010-28692 enables an apparatus to maintain correct date and time in an always communicable state. However, the image capturing apparatus is not necessarily always communicable during recording, and therefore, the date and time setting may be incorrect. If the creation date and time of the record file is incorrect, creation date and time information of the file to be sent to the server when the file is uploaded can be incorrect. If the creation date and time information of the file is incorrect, there is a possibility that the server will not be able to properly determine whether uploading is permitted.

### SUMMARY

The present disclosure is directed to a technique for preventing the upload of a file that may be prohibited from being uploaded.

The present disclosure in its first aspect provides a communication apparatus as specified in claim 1. Optional features are specified in claims 2 to 9.

The present disclosure in its second aspect provides a control method as specified in claim 10. Optional features of the second aspect may be specified in or derivable from claims 2 to 9.

The present disclosure in its third aspect provides a program as specified in claim 11. Optional features of the third aspect may be specified in or derivable from claims 2 to 9.

The present disclosure may provide for the upload of a file that may be prohibited from being uploaded can be prevented. That is to say the present disclosure may provide a means or method which can prevent a file is or would have been prohibited from being uploaded, the file being a file which may be prohibited from being uploaded. The present disclosure provides means and method to which ensure that files which should not have been uploaded, for example where the files would have been prevented from being upload during a given limitation period, are not upload for example by accident or incorrect configuration.

Features of the present disclosure will become apparent from the following description of embodiments with reference to the attached drawings. The following description of embodiments is described by way of example.

### BRIEF DESCRIPTION OF THE DRAWINGS

Fig. 1 is a diagram illustrating a system configuration according to an embodiment of the present disclosure.
Fig. 2 is a block diagram illustrating an example of an image capturing apparatus according to an embodiment of the present disclosure.
Fig. 3 is a flowchart illustrating an example in which a recording prohibition period is set in a data server, and a file recorded during the set recording prohibition period is properly rejected for upload by the data server.
Fig. 4 is a flowchart illustrating an example in which a recording prohibition period is set in the data server, and a file recorded during the set recording prohibition period is improperly permitted for upload by the data server.
Fig. 5 is a flowchart illustrating an example of control for preventing upload in a case where the creation date and time of the file is incorrect.

### DESCRIPTION OF THE EMBODIMENTS

Embodiments of the present disclosure will be described hereinbelow with reference to the accompanying drawings.

It is to be understood that the following embodiments are examples of implementation means of the present disclosure and may be appropriately modified or changed depending on the configuration of an apparatus to which the present disclosure is applied or various conditions. The embodiments, or one or more features thereof, may also be combined as appropriate or where advantageous.

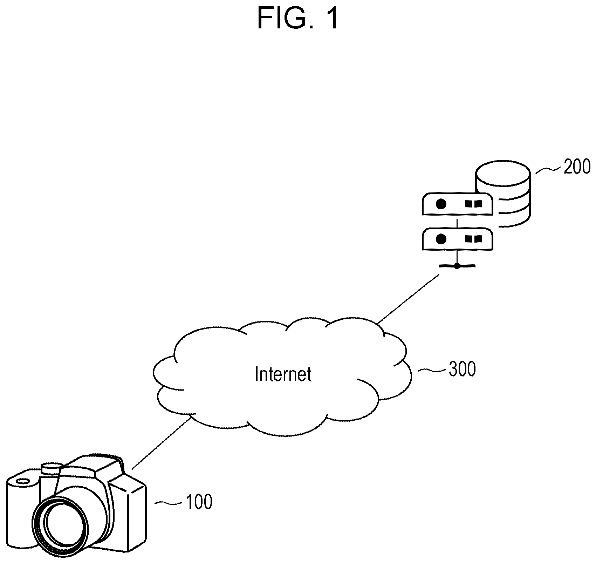

Fig. 1 is a diagram illustrating a system configuration of a data server 200 and an image capturing apparatus 100 that is communicably connected to the data server 200 via a network 300, for example the internet, according to an embodiment of the present disclosure. The image capturing apparatus 100 is an example of a communication apparatus, and the data server 200 is an example of an external device. The communication apparatus may be any apparatus that is configured to upload a file. The external device is any external storage device connectable to a network and configured to receive a file from a communication device.

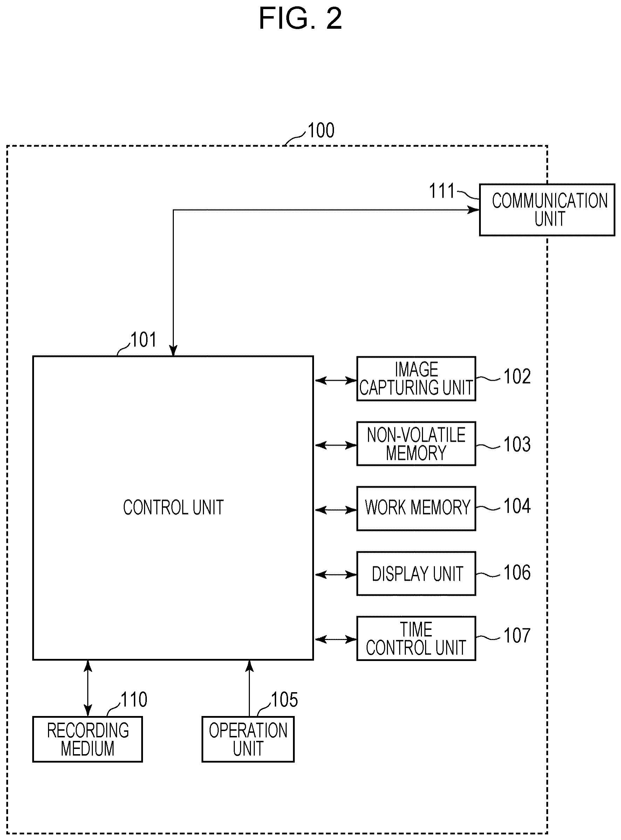

Fig. 2 is a block diagram illustrating an example of the configuration of the image capturing apparatus 100 according to an embodiment of the present disclosure.

A control unit 101 controls the components of the image capturing apparatus 100 according to input signals or programs. The entire apparatus may be controlled not by the control unit 101 but by a plurality of hardware components sharing the processes.

An image capturing unit 102 converts subject light imaged by a lens included in the image capturing unit 102 to an electrical signal, performs a noise reduction process and other processes, and outputs digital data as image data. The captured image data is accumulated in a buffer memory, is thereafter subjected to a predetermined calculation by the control unit 101, and is recorded in a recording medium 110.

A non-volatile memory 103 is an electrically erasable/recordable non-volatile memory, in which programs and so on executed by the control unit 101 are stored.

A work memory 104 is used as a buffer memory for temporarily storing image data captured by the image capturing unit 102, a memory for image display by a display unit 106, and a work area for the control unit 101.

An operation unit 105 is used to accept instructions to the image capturing apparatus 100 from a user. The operation unit 105 includes operation members such as a power button for turning the image capturing apparatus 100 on and off by a user operation, a release switch for providing instructions to perform image capturing, and a playback button for providing instructions to playback image data. A touch panel provided on the display unit 106, described later, is also included in the operation unit 105.

The display unit 106 displays a viewfinder image during image capturing, captured image data, characters for interactive operations, and so on. The display unit 106 does not have to be incorporated in the image capturing apparatus 100. The image capturing apparatus 100 need only be connected to the internal or external display unit 106 and have at least a display control function for controlling the display of the display unit 106.

A time control unit 107 manages date and time information. For example, the time control unit 107 updates or stores date and time information and provides the date and time information to the control unit 101. The date and time information can be automatically updated by the time control unit 107, or can be changed by the user operating the operation unit 105. The date and time information can be updated using the Network Time Protocol (NTP) via the communication unit 111.

The recording medium 110 can record image data output from the image capturing unit 102.

At that time, the date and time information of the time control unit 107 can be added as creation date and time of data (an example of acquisition date and time). The recording medium 110 may be configured to be detachably attached to the image capturing apparatus 100 or may be housed in the image capturing apparatus 100. In other words, the image capturing apparatus 100 need only include at least a means for accessing the recording medium 110.

The communication unit 111 is an interface for connecting to an external device. The image capturing apparatus 100 can exchange data with an external device via the communication unit 111. The control unit 101 implements communication with an external device by controlling the communication unit 111.

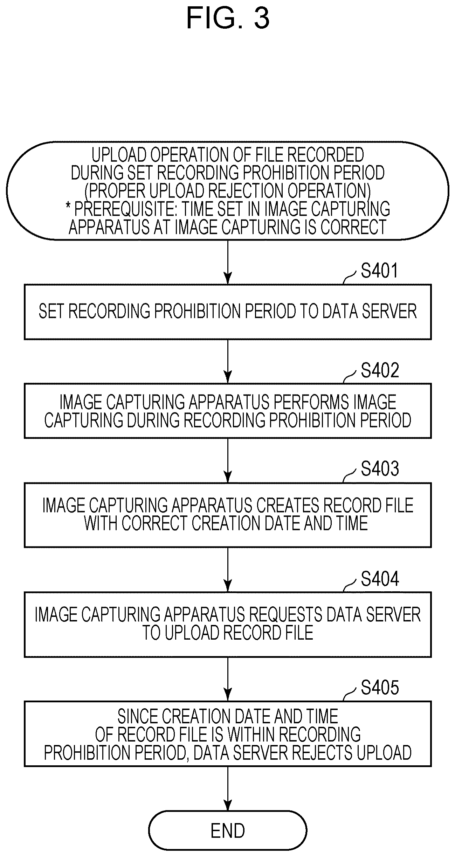

Fig. 3 is a flowchart illustrating an example in which a recording prohibition period is set in the data server 200, and a file recorded by the image capturing apparatus 100 during the set recording prohibition period is rejected for upload by the data server 200. The process illustrated in Fig. 3 is an example of an expected proper operation. In the example of this figure, the date and time set in the image capturing apparatus 100 is correct. The recording prohibition period here is a prohibition period during which recording by the image capturing apparatus 100 is not prohibited, but uploading of a file recorded during a designated period is prohibited (or limited). In S401, the user sets the recording prohibition period to the data server 200. For example, the user can set the recording prohibition period using various terminals, such as a personal computer (PC) and a smartphone. The recording prohibition period may be a period from when a predetermined operation is selected by the user until another predetermined operation is selected, or any designated period. However, the recording prohibition period is not limited to the above examples.

In S402, the control unit 101 performs image capturing using the image capturing unit 102 during the recording prohibition period set in S401. The control unit 101 may start image capturing in response to a user operation performed via the image capturing apparatus 100 or may start image capturing remotely via an external terminal such as a smartphone.

In S403, the control unit 101 stores a record file captured by the image capturing apparatus 100 into the recording medium 110. At that time, date and time information acquired from the time control unit 107 is stored as creation date and time of the file.

In S404, the control unit 101 requests the data server 200 to upload the record file to be transmitted via the communication unit 111. At that time, the control unit 101 transmits the creation date and time of the record file from the image capturing apparatus 100 to the data server 200.

In S405, the data server 200 checks the creation date and time of the record file transmitted from the image capturing apparatus 100 against the recording prohibition period. Since the creation date and time of the record file is within the recording prohibition period, the data server 200 sends a reject response to the upload request sent from the image capturing apparatus 100.

The control unit 101 stops the upload of the file because a reject response is returned from the data server 200 in S405 in response to the upload request transmitted by the image capturing apparatus 100 in S404. Thus, the recording prohibition period set by the data server 200 functions properly.

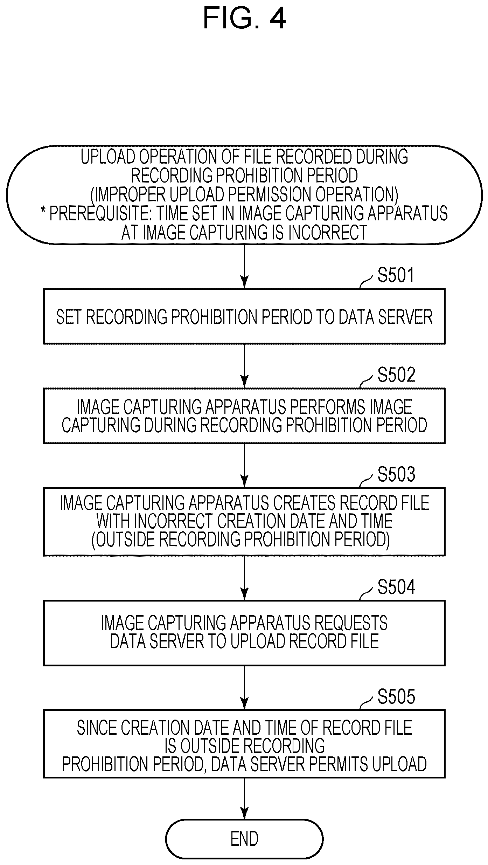

Fig. 4 is a flowchart illustrating an example in which a recording prohibition period is set in the data server 200, and a file recorded by the image capturing apparatus 100 during the set recording prohibition period is permitted for upload by the data server 200. The process illustrated in Fig. 4 is an example of an improper operation.

In the example of this figure, it is assumed that the date and time set in the image capturing apparatus 100 is incorrect at the time of image capturing.

In S501, the user sets a recording prohibition period to the data server 200.

In S502, the control unit 101 performs image capturing with the image capturing unit 102 during the recording prohibition period set in S501.

In S503, the control unit 101 stores the record file captured by the image capturing apparatus 100 into the recording medium 110. At that time, date and time information acquired from the time control unit 107 is stored as creation date and time of the file. However, this date and time information stores a date and time different from the actual creation date and time of the file (based on the premise that the date and time set in the image capturing apparatus 100 is incorrect). This creation date and time of the file is a date and time outside the recording prohibition period set in S501.

In S504, the control unit 101 requests the data server 200 to upload the record file via the communication unit 111. At that time, the control unit 101 also transmits the creation date and time of the record file from the image capturing apparatus 100 to the data server 200.

In S505, the data server 200 checks the creation date and time of the record file transmitted from the image capturing apparatus 100 against the recording prohibition period. Since the creation date and time of the record file is outside the recording prohibition period, the data server 200 returns a permission response in response to the upload request transmitted from the image capturing apparatus 100.

The control unit 101 uploads the file to the data server 200 because a permission response is returned from the data server 200 in S505 in response to the upload request transmitted in S504. The file is originally a record file captured during the recording prohibition period, and it is expected to be rejected for upload in S505. However, the creation date and time of the file is incorrect, and therefore, the data server 200 cannot make a correct determination. As a result, the file that should not be uploaded is uploaded. The present disclosure has a feature of preventing such improper uploads from the image capturing apparatus 100 side.

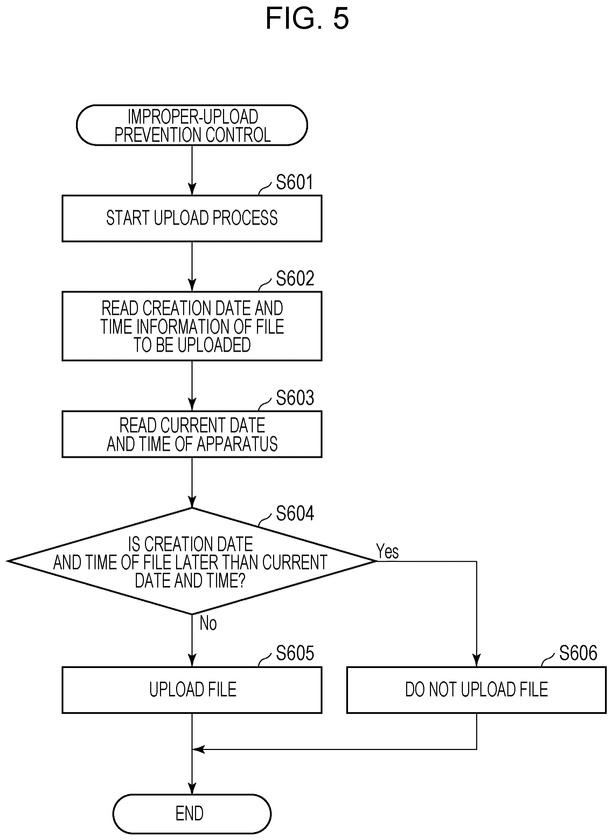

Fig. 5 is a flowchart illustrating an example of control for preventing improper upload according to an embodiment of the present disclosure. This flowchart illustrates the details of a process performed by the image capturing apparatus 100.

In S601, the control unit 101 detects the start of a file upload process. A trigger for starting the upload may be, for example, a user operation or the detection of a communication connection.

In S602, the control unit 101 reads the creation date and time of a file to be uploaded from the recording medium 110.

In S603, the control unit 101 reads the current date and time from the time control unit 107.

In S604, the control unit 101 compares the creation date and time of the file read in S602 with the current date and time read in S603. If the comparison result shows that the creation date and time of the file is a (past) date and time before the current date and time, the process moves to S605, and if the creation date and time of the file is a (future) date and time later than the current date and time, the process moves to S606.

In S605, the control unit 101 transmit an upload request (one example of a transmission request) to the data server 200 via the communication unit 111. The upload request further includes the creation date and time of the file read in S602. If the data server 200 returns a permission response in response to the upload request (that is, when the control unit 101 receives a permission response), the control unit 101 uploads the file and terminates the process. If the data server 200 returns a rejection response in response to the upload request (that is, when the control unit 101 receives a rejection response), the control unit 101 terminates the process.

In S606, the control unit 101 terminates the process without uploading the file (without sending an upload request to the data server 200.

As illustrated in the flowchart, if the creation date and time of the file is clearly incorrect, such as being later than the date and time at the time of upload, uploading can be prevented by the image capturing apparatus 100. This makes it possible to reduce the possibility that the data server 200 mistakenly determines the recording prohibition period and performs improper upload. In order to determine whether the creation date and time of the file set by the image capturing apparatus 100 is incorrect, comparison with a date and time set at the time of upload is used, and it is therefore assumed that the date and time set at the time of upload is correct. For this reason, the image capturing apparatus 100 may perform the Network Time Protocol (NTP) via the communication unit 111 during the steps from S601 to S603 and may update (correct) the date and time information stored in the time control unit 107 to the correct current date and time. However, the date and time set at the time of upload need not necessarily be based on the NTP, and may be automatically set using another method or manually operated by the user.

The present disclosure is not limited to these specific embodiments, and various modifications that do not depart from the gist of the disclosure are also included in the scope of the present disclosure. Any of the components of above-described embodiments may be combined as appropriate.

For example, the control unit 101 may regard even a (past) creation date and time of the file before the current date as a date and time that is likely to be incorrect if it is within a predetermined period, and may terminate the process without uploading the file.

A case where the creation date and time of the file used by the data server 200 to determine whether upload is permitted is represented, not as date and time information, but as an offset value from the current date and time, and the file is updated immediately after being created is also assumed. In such a case, the control unit 101 may suppress time synchronization (changing the date and time information of the image capturing apparatus 100) during the period from the creation of the file until the completion of the upload.

A case where the creation date and time of the file used by the data server 200 to determine whether upload is permitted is represented, not as date and time information, but as an offset value from the current date and time, and the file include time zone information is also assumed. In this case, the control unit 101 may transmit an offset value in consideration of the time zone information of the file and current time zone information.

The present disclosure also includes a case in which software program(s) for implementing the functions of the above-described embodiments are supplied to a system or apparatus having a computer capable of executing the program(s), either directly from a recording medium or via wired or wireless communication, and the program(s) are executed by the computer.

Accordingly, program code(s) themselves that are supplied to and installed in a computer in order to implement the functional processing of the present disclosure by the computer also constitute the present disclosure. That is, computer program(s) themselves for implementing the functional processing of the present disclosure are also included in the scope of the present disclosure.

In such a case, as long as the program(s) have the functions described above, the forms of the program(s) are not limited, and may include object code, an interpreted program, or script data supplied to an operating system (OS).

Examples of recording media for supplying the program(s) may include magnetic recording media such as hard disks and magnetic tapes, optical/magneto-optical storage media, and non-volatile semiconductor memories.

Another conceivable method of supplying the program(s) is storing computer program(s) that constitute the present disclosure on a server on a computer network, and allowing a client computer that has connected to the server to download and install the computer program(s).

### Configuration 1

A communication apparatus comprising:
a time control unit configured to manage date and time information;
a file acquisition unit configured to acquire a file;
a recording unit configured to record an acquisition date and time at which the file has been acquired, based on the date and time information managed by the time control unit; and
a transmission control unit configured to compare an acquisition date and time of a file to be transmitted to an external device with a current date and time managed by the time control unit, and, when a comparison result does not satisfy a predetermined condition, to prevent transmission of the file to the external device.

### Configuration 2

The communication apparatus according to Configuration 1, wherein the external device is capable of setting a prohibition period during which transmission of a file recorded during a specified period is prohibited.

### Configuration 3

The communication apparatus according to Configuration 2, wherein, when the comparison result satisfies the predetermined condition, the transmission control unit transmits, to the external device, a transmission request to request the file to be transmitted. Configuration 4

The communication apparatus according to Configuration 3, wherein, when the comparison result does not satisfy the predetermined condition, the transmission control unit does not transmit the transmission request to the external device.

### Configuration 5

The communication apparatus according to Configuration 4,
wherein, in response to receiving a permission response in response to the transmission request, the transmission control unit transmits, to the external device, the file to be transmitted, and
wherein, in response to receiving a rejection response in response to the transmission request, the transmission control unit does not transmit, to the external device, the file to be transmitted .

### Configuration 6

The communication apparatus according to any one of Configurations 1 to 5,
wherein, when the current date and time is later than the acquisition date and time of the file to be transmitted, the transmission control unit determines that the predetermined condition is satisfied, and
wherein, when the current date and time is before the acquisition date and time of the file to be transmitted, the transmission control unit determines that the predetermined condition is not satisfied.

### Configuration 7

The communication apparatus according to any one of Configurations 1 to 6, wherein the time control unit
corrects the current date and time before the acquisition date and time of the file to be transmitted to the external device is compared with the current date and time managed by the time control unit.

### Configuration 8

The communication apparatus according to any one of Configurations 1 to 7, wherein the communication apparatus comprises an image capturing apparatus.

### Configuration 9

The communication apparatus according to Configuration 8, wherein the file comprises a record file captured by the image capturing apparatus.

### Method

A control method for a communication apparatus, the method comprising:
managing date and time information;
acquiring a file;
recording an acquisition date and time at which the file has been acquired, based on the managed date and time information; and
comparing an acquisition date and time of a file to be transmitted to an external device with a current date and time, and, when a comparison result does not satisfy a predetermined condition, preventing transmission of the file to the external device.

### Program

A program for causing a computer to execute:
a time control function of managing date and time information;
a file acquisition function of acquiring a file;
a recording function of recording an acquisition date and time at which the file has been acquired, based on the date and time information managed by the time control function; and
a transmission control function of comparing an acquisition date and time of a file to be transmitted to an external device with a current date and time managed by the time control function, and, when a comparison result does not satisfy a predetermined condition, preventing transmission of the file to the external device.

A computer program comprising instructions which, when executed by a processing unit, cause the processing unit to carry out a method comprising:
managing date and time information;
acquiring a file;
recording an acquisition date and time at which the file has been acquired, based on the managed date and time information; and
comparing an acquisition date and time of a file to be transmitted to an external device with a current date and time, and, when a comparison result does not satisfy a predetermined condition, preventing transmission of the file to the external device.

### Other Embodiments

Embodiment(s) of the present disclosure can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

Various embodiments have been described in detail above but it will be understood that the present disclosure is not limited to these embodiments and encompasses all modifications, variants, alternatives and equivalents falling within the scope of the appended claims.

## Claims

1. A communication apparatus (100) comprising:
a time control unit (107) configured to manage date and time information;
a file acquisition unit (100) configured to acquire a file;
a recording unit (110) configured to record an acquisition date and time at which the file has been acquired, based on the date and time information managed by the time control unit; and
a transmission control unit (101) configured to compare an acquisition date and time of a file to be transmitted to an external device with a current date and time managed by the time control unit, and, when a comparison result does not satisfy a predetermined condition, to prevent transmission of the file to the external device.

2. The communication apparatus according to claim 1, wherein the external device is capable of setting a prohibition period during which transmission of a file recorded during a specified period is prohibited.

3. The communication apparatus according to claim 1 or claim 2, wherein, when the comparison result satisfies the predetermined condition, the transmission control unit transmits, to the external device, a transmission request to request the file to be transmitted.

4. The communication apparatus according to any one of the preceding claims, wherein, when the comparison result does not satisfy the predetermined condition, the transmission control unit does not transmit the transmission request to the external device.

5. The communication apparatus according to any one of the preceding claims,
wherein, in response to receiving a permission response in response to the transmission request, the transmission control unit transmits, to the external device, the file to be transmitted, and
wherein, in response to receiving a rejection response in response to the transmission request, the transmission control unit does not transmit, to the external device, the file to be transmitted.

6. The communication apparatus according to any one of the preceding claims,
wherein, when the current date and time is later than the acquisition date and time of the file to be transmitted, the transmission control unit determines that the predetermined condition is satisfied, and
wherein, when the current date and time is before the acquisition date and time of the file to be transmitted, the transmission control unit determines that the predetermined condition is not satisfied.

7. The communication apparatus according to any one of the preceding claims, wherein the time control unit
corrects the current date and time before the acquisition date and time of the file to be transmitted to the external device is compared with the current date and time managed by the time control unit.

8. The communication apparatus according to any one of claims 1 to 7, wherein the communication apparatus comprises an image capturing apparatus.

9. The communication apparatus according to claim 8, wherein the file comprises a record file captured by the image capturing apparatus.

10. A control method for a communication apparatus (100), the method comprising:
managing date and time information;
acquiring a file;
recording an acquisition date and time at which the file has been acquired, based on the managed date and time information; and
comparing an acquisition date and time of a file to be transmitted to an external device with a current date and time, and, when a comparison result does not satisfy a predetermined condition, preventing transmission of the file to the external device.

11. A program for causing a computer to execute:
a time control function of managing date and time information;
a file acquisition function of acquiring a file;
a recording function of recording an acquisition date and time at which the file has been acquired, based on the date and time information managed by the time control function; and
a transmission control function of comparing an acquisition date and time of a file to be transmitted to an external device with a current date and time managed by the time control function, and, when a comparison result does not satisfy a predetermined condition, preventing transmission of the file to the external device.
